(19) Europäisches Patentamt
European Patent Office
Office européen des brevets

(11) **EP 3 312 792 A1**

(12) **EUROPEAN PATENT APPLICATION**
published in accordance with Art. 153(4) EPC

(43) Date of publication:
**25.04.2018 Bulletin 2018/17**

(21) Application number: **15895684.7**

(22) Date of filing: **14.10.2015**

(51) Int Cl.:
***G06Q 50/06*** (2012.01)          ***H02H 3/02*** (2006.01)

(86) International application number:
**PCT/JP2015/079081**

(87) International publication number:
**WO 2016/203665 (22.12.2016 Gazette 2016/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **16.06.2015 JP 2015121305**

(71) Applicants:
• **Kabushiki Kaisha Toshiba**
**Minato-ku**
**Tokyo 105-8001 (JP)**

• **Toshiba Energy Systems & Solutions Corporation**
**Saiwai-ku**
**Kawasaki-shi**
**Kanagawa 2120013 (JP)**

(72) Inventors:
• **UEMURA, Haruka**
**Tokyo 105-8001 (JP)**
• **SAKASHITA, Hironori**
**Tokyo 105-8001 (JP)**
• **MIYOSHI, Tetsuya**
**Tokyo 105-8001 (JP)**

(74) Representative: **Awapatent AB**
**P.O. Box 11394**
**404 28 Göteborg (SE)**

(54) **PROTECTIVE CONTROL DEVICE**

(57)      Provided is a protective control device capable of obtaining information required to calculate an application fee. A protective control device includes a clock unit 3 that clocks a date and time, a time information creating unit 4 which associates the operation status of the application with time information obtained from a clock unit 3, and which creates application time information, a time information memory unit 5 that stores the application time information, and a time information output unit 6 that outputs the application time information stored in the time information memory unit 5 to an output unit 102.

*FIG. 2*

# EP 3 312 792 A1

**Description**

FIELD

Embodiments of the present disclosure relate to a protective control device that protects a power system.

BACKGROUND

When an accident such as lightning strike, etc. occurs in a power system including power generation facilities, transformer facilities, and power transmission facilities, etc., it is necessary to promptly disconnect the accident section from the power system, and to eliminate the accident from the power system. Hence, the power system is divided by switches, and the switch and a power device that is needed to be controlled at the time of accident is monitored and controlled by a protective control device installed at a terminal of each segment.

The protective control device converts the analog signals of a current and a voltage input from the power system into digital signals, performs processing and calculation on the digital signals by predetermined applications, and achieves a protection function and a protection performance. The protective control device includes a calculation unit which detects an occurrence of an accident and the details thereof, and which determines control details, and a control unit that outputs a command signal to the switch and the device in the segment.

For example, the protective control device that protects a power transmission line has predetermined applications, such as a calculation application which calculates a current actuation relay element or an insufficient voltage relay element that detect an occurrence of an accident in the power transmission line, and a sequence application that outputs a current breaking command to a circuit breaker based on the calculation result by the calculation application. Such calculation application and sequence application are installed in, for example, the calculation unit of the protective control device beforehand.

CITATION LIST

NON-PATENT LITERATURES

Non-patent document 1: "Protection Relay Systems Engineering", the Institute of Electrical Engineers of Japan, March, 2002, p99, 100

SUMMARY

Conventionally, the functions of the protective control device are fixed, and when a function is added, a security member goes to the installation location of each protective control device, and reconstructs the application in some cases. In addition, the calculation unit itself is replaced with a newly created calculation unit, and that work amount is enormous. In recent years, however, since introduction of distributed-type power supplies is enhancing and uneven distribution of power supply is advancing, there is a demand to add an application that has a monitoring and controlling function in accordance with a change in the power system.

In this case, when a new application is added to the protective control device, a charging for the new application is expected. In addition, it is also expected that a free trial period is set for the new application. Hence, as for the protective control device, there is a request of obtaining information required to calculate an application charge in accordance with a charging system and a charge time period which differ for each application.

Embodiments of the present disclosure have been proposed to address the foregoing technical problems of conventional technologies. An objective is to provide a protective control device capable of obtaining information required to calculate an application charge.

In order to achieve the above objective, a protective control device according to an embodiment includes:

a clock unit that clocks a date and time;
a time information creating unit which associates an operation status of an application with time information obtained from the clock unit, and which creates application time information;
a time information memory unit that stores the application time information; and
a time information output unit that outputs the application time information stored in the time information memory unit to an output unit.

BRIEF DESCRIPTION OF DRAWINGS

FIG. 1 is an explanatory diagram for explaining a charging form for an application, in which FIG. 1(a) illustrates a case in which the charging form is collective, and FIG. 1(b) illustrates a case in which the charging form is time of use with no trial period, and FIG. 1(c) illustrates a case in which the charging form is time of use with trial period;
FIG. 2 is a block diagram illustrating an example structure of a protective control device according to a first embodiment;
FIG. 3 is a flowchart illustrating an operation of the protective control device according to the first embodiment;
FIG. 4 is a block diagram illustrating an example structure of a protective control device according to a second embodiment;
FIG. 5 is a block diagram illustrating an example structure of a protective control device according to a third embodiment;
FIG. 6 is a flowchart illustrating an operation of the protective control device according to the third embodiment;
FIG. 7 is a block diagram illustrating an example structure of a protective control device according to a fourth embodiment; and
FIG. 8 is a block diagram illustrating an example structure of a protective control device according to a fifth embodiment.

DETAILED DESCRIPTION

[First Embodiment]

[1. Structure]

A protective control device A according to a first embodiment will be described in detail with reference to the figures.

<Application>

First, an application to be added to the protective control device A according to this embodiment will be described in detail. The application is a software implemented in the protective control device A in order to achieve the function of each unit of the protective control device A. The function of each unit of the protective control device A is achieved by physically utilizing the hardware of a computer by the application. Note that the application may be considered as a program. In addition, in the following description, the application will be referred to as an appli for short in some cases.
Charging system are set for each application. For example, the charging system as indicated in the following table 1 can be set.

[Table 1]

| Appli No. | Charging system | Presence of trial period | Appli price information (unit price) |
|---|---|---|---|
| 1 | Collective | None | x JP 1 YEN |
| 2 | Time of use | None | 1 hour x JP 2 YEN |
| 3 | Time of use | Present | 1 day x JP 3 YEN |

In the example in table 1, the charging form is set in collective or in time of use. The charging form in collective is a configuration in which a predetermined application charge is charged at once at the time of the completion of the installation of an application. The charging form in time of use is a configuration in which a predetermined application fee is charged in accordance with a time of use of the application. The time of use may be from a time after the completion of the installation of the application to the uninstallation thereof. In addition, it may be from a time after the end of a trial period to be described later to the uninstallation of the application.
The time of use may be based on an hour unit or a time unit, and may be a minute unit, a month unit, or a year unit. For example, when the utilization of the application starts, a fee by a year may be charged. In this case, when the utilization of the application enters the second year, the fee by a year may further be charged.
Each application is set with the presence or absence of the trial period. The trial period is a time period at which a user can utilize the application without a charging of the application fee. For example, the trial period may be a time period until a predetermined time has elapsed after the operation of the application starts. It is general that the trial period is set by a day or by a month, but may be based on other units, such as an hour and a year. Although it is not indicated in table 1, when the trial period is set, information of the trial period set is included. The charging form of the application, the presence or absence of the trial period, and the price information are included in the application as the information related to the charging of the application.

In addition, the application price information (unit price) is set for each application. When, for example, the charging form is collective, an amount of money is set in a multiplication by JP 1 YEN. This application fee is charged at the time of, for example, completion of the installation of the application. In addition, when the charging form is time of use, an amount of money such as a multiplication by JP 2 YEN per an hour or a multiplication by JP 3 YEN per a day is set. The amount of money to be charged is calculated by multiplying the time of use by these application fees.

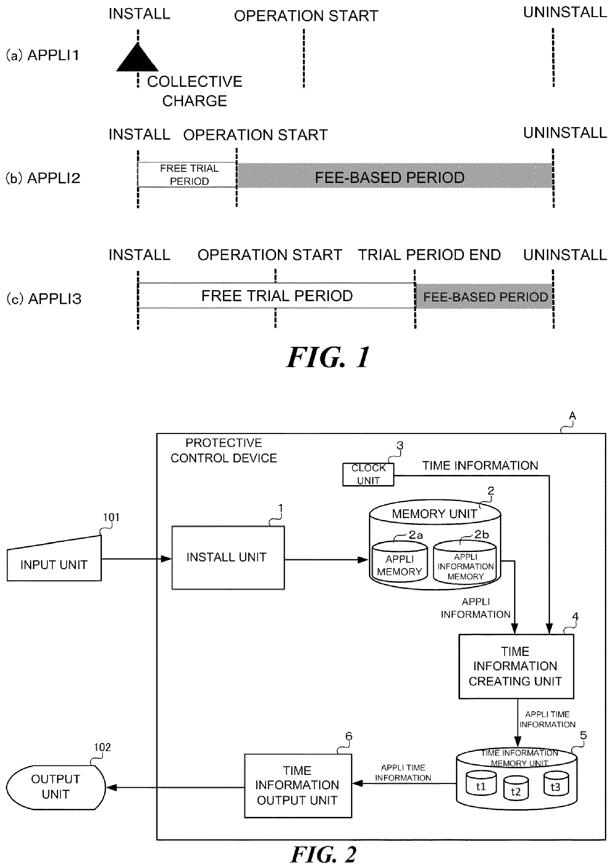

Each charging forms for appli No. 1 to No. 3 in table 1 will be described in detail with reference to FIG. 1. As is indicated in table 1, the appli No. 1 has a charging forms that is collective, and has the appli price information that is a multiplication by JP 1 YEN. Hence, as illustrated in FIG. 1(a), once the appli No. 1 is installed, the application fee that is a multiplication of JP 1 YEN is collectively charged.

Next, as is indicated in table 1, the appli No. 2 has the charging form that is time of use without the trial period, and has the appli price information that is a multiplication by JP 2 YEN per an hour. Hence, as illustrated in FIG. 1(b), the charge time period starts after the appli No. 2 is installed when the actual operation starts. The application fee that is JP 2 YEN multiplied to the time from when the operation starts and until the appli No. 2 is uninstalled is charged.

In addition, as indicated in table 1, the appli No. 3 has the charging form that is time of use with the trial period, and has the appli price information that is a multiplication by JP 3 YEN per a day. Hence, as indicated in FIG. 1(c), a predetermined time after the appli No. 3 is installed when the actual operation starts is the trial period, and no application fee is charged. Next, an amount of money that is the application fee which is JP 3 YEN multiplied to days from after the trial period ends until the appli No. 3 is uninstalled is charged.

<Protective Control Device>

The protective control device A to which the above applications are installed will be described with reference to FIG. 2. The protective control device 1 performs protective control to protect a power system by detecting an abnormality in the power system, and by opening and closing the current path. In the following description, however, the description for a processing unit for a normal protective control will be omitted, and processing units for adding the application and charging the application fee will be described.

More specifically, the protective control device A is constructed by a computer or a special purpose electronic circuit which are connected with an input unit 101 and an output unit 102, includes a CPU and a memory, and is operated under the control of a predetermined application. The protective control device A includes an install unit 1, a memory unit 2, a clock unit 3, a time information creating unit 4, a time information memory unit 5, and a time information output unit 6. These processing unit may be included in a calculation unit (unillustrated) which detects an occurrence of an accident and the details thereof, and which determines the control details, in the protective control device A.

(Input Unit)

The input unit 101 includes an input device to input information related to the installation of the application, and an interface to notify the input information to the protective control device A. This input unit 101 is, for example, for a user to input an operation request to the protective control device A. Example input devices adopted are a touch panel (including one placed on the display device of the output unit 102), a mouse, and a keyboard, etc.

(Output Unit)

The output unit 102 includes an interface to output information from the protective control apparatus A, and a display device to display screens for the user to check and select the operation details based on the output information. This output unit 102 is, for example, for displaying the time of use of the application in the protective control device A and the status of the protective control device A in the form of a list or a drawing, and displaying an alert to a system or the user operation. An example display device is a display like a liquid crystal display panel that has a display screen. In addition, recording means like a printer is also applicable as the output unit 102.

(Install unit)

The install unit 1 installs the application in the memory unit 2. The install unit 1 receives a command for an installation process of the application from the input unit 101, and stores the received application in the memory unit 2.

(Memory Unit)

The memory unit 2 includes an appli memory 2a and an appli information memory 2b. The appli memory 2a stores the application installed by the install unit 1. The appli memory 2a is capable of storing the plurality of applications . The appli information memory 2b stores the information related to the application stored in the appli memory 2a.

The appli information memory 2b stores, for example, application information indicated in the following table 2.

[Table 2]

| Appli No. | Appli operation status | Charging form | Presence of trial period | Appli price information (unit price) |
|---|---|---|---|---|
| 1 | Installation complete | Collective | None | x JP 1 YEN |
| 2 | Operating | Time of use | None | 1 hour x JP 2 YEN |
| 3 | Operating | Time of use | Present | 1 day x JP 3 YEN |

The application information includes information of the operation status of the application, and information of the charging of the application included in the applications. The operation status of the application is information indicating the present status of the application. "Installation complete" indicates that the application is installed in the appli memory 2a by the install unit 1. In addition, "operating" indicates that the application installed in the appli memory 2a is executed. Still further, when the application in the appli memory 2a is uninstalled, the operation status becomes "uninstallation complete". The operation status of the application is updated as appropriate by an unillustrated updating unit.

The information of the charging of the application includes the charging form of the application, the presence or absence of the trial period, and price information. Although it is not indicated in table 2, when the trial period is set, information of the set trial period is included. These information are extracted from the installed application by an unillustrated extracting unit, and is stored in the appli information memory 2b. The appli information memory 2b outputs the stored application information to the time information creating unit 4.

(Clock unit)

The clock unit 3 clocks the present date and time. An example clock unit 3 applicable is a clock installed in the protective control device A beforehand. The clock unit 3 outputs the measured date and time as time information to the time information creating unit 4.

(Time Information Creating Unit)

The time information creating unit 4 associates the application information obtained from the appli information memory 2b with the time information obtained from the clock unit 3. The time information creating unit 4 creates an application time information as indicated in the following table 3.

[Table 3]

| Appli No. | Time information | | | |
|---|---|---|---|---|
| | A) Installation date and hour | B) Operation start date and hour | C) Trial period end date and hour | D) Uninstallation date and hour |
| 1 | y1 year/m1 month/d1 day/a1 hour/b1 minute | y2 year/m2 month/d2 day/a2 hour/b2 minute | - | y3 year/m3 month/d3 day/a3 hour/b3 minute |
| 2 | y4 year/m4 month/d4 day/a4 hour/b4 minute | y5 year/m5 month/d5 day/a5 hour/b5 minute | - | y6 year/m6 month/d6 day/a6 hour/b6 minute |
| 3 | y7 year/m7 month/d7 day/a7 hour/b7 minute | y8 year/m8 month/d8 day/a8 hour/b8 minute | y9 year/m9 month/d9 day/a9 hour/b9 minute | y10 year/m10 month/d10 day/a10 hour/b10 minute |
| 4 | ... | ... | ... | ... |
| 5 | ... | ... | ... | ... |

The time information creating unit 4 associates the application information with the time information every time the operation status of the application stored in the appli information memory 2b is updated. Hence, information that are the installation date and time, the operation start date and time, and the uninstallation date and time is provided for each application. In addition, when the trial period is set for the application, the trial period end date and time is also provided.

The installation date and time is the date and time at which the installation of the application in the appli memory 2a completes. The operation start date and time is the date and time at which the application installed in the appli memory 2a is executed. The uninstallation date and time is the date and time at which the uninstallation of the application stored in the application memory 2a completes.

The trial period end date and time is the date and time at which the free trial period with no application fee ends. As for the trial period end date and time, the date and time calculated from the operation start date and time by an unillustrated calculation unit may be applied. When, for example, the trial period is set to three months and the operation start date and time is May 13, 2015, the trial period end date and time is August 13, 2015.

Although the time information creating unit 4 may associate the application information with the time information every time the operation status of the application stored in the appli information memory 2b is updated, the present disclosure is not limited to this configuration. For example, the time information creating unit 4 may be provided with a monitoring unit that monitors the operation status of the application, and every time the monitoring unit detects a change in the operation status, the application information may be associated with the time information. The time information creating unit 4 outputs associated application time information to the time information memory unit 5.

(Time Information Memory Unit and Time Information Output Unit)

The time information memory unit 5 stores the application time information obtained from the time information creating unit 4. The time information output unit 6 outputs the application time information stored in the time information memory unit 5 to the output unit 102 when, for example, a request of displaying the application time information is input to the input unit 101. The application time information output by the time information output unit 6 is displayed on the output unit 102.

[2. Operation]

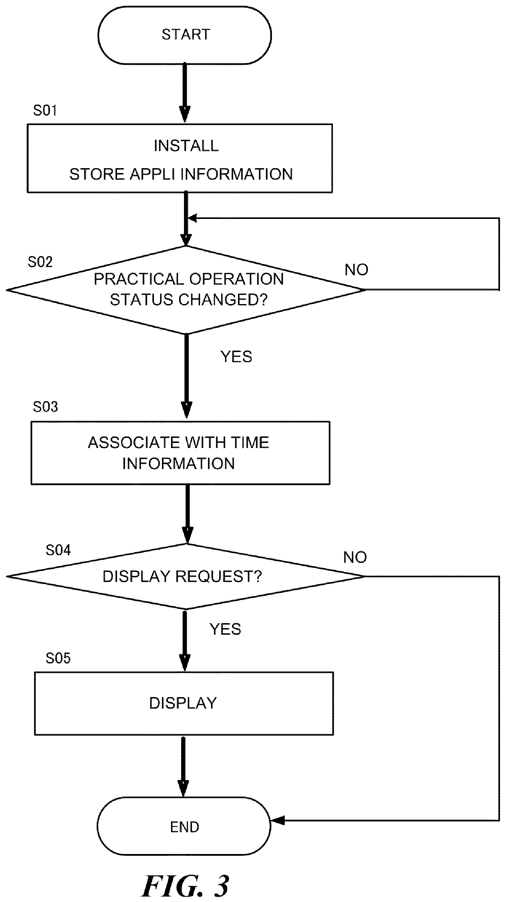

An operation of the protective control device according to this embodiment will be described with reference to FIG. 3. First, the install unit 1 installs the application in the appli memory 2a. Next, the extracting unit of the appli information memory 2b extracts application information from the application, and stores the extracted information in the appli information memory 2b (step S01).

When the installation of the application completes, the updating unit of the appli information memory 2b updates the operation status in the application information to "installation complete". Accordingly, when the updating unit of the application information memory 2b updates the operation status of the application information (step S02; YES), the time information creating unit 4 stores, in the time information memory unit 5, the application time information obtained by associating the updated operation status with the time information obtained from the clock unit 3 (step S03) . In addition, when there is no change in the operation status of the application information (step S02: NO), an application time information is not created. Note that every time the updating unit of the application information memory 2b updates the operation status, the steps S02 and S03 are repeated.

When, for example, a request of displaying the application time information is input to the input unit 101 (step S04: YES), the time information output unit 6 outputs, to the output unit 102, the application time information stored in the time information memory unit 5. Next, the output unit 102 displays the application time information output by the time information output unit 6 (step S05). When no request of displaying the application time information is input (step S04: NO), the process is terminated.

[3. Action and Effect]

(1) The protective control device A according to this embodiment includes the clock unit 3 that clocks a date and time, the time information creating unit 4 which associates the operation status of the application with the time information obtained from the clock unit 3 and which creates the application time information, the time information memory unit 5 that stores the application time information, and the time information output unit 6 that outputs the application time information stored in the time information memory unit 5 to the output unit 102.

The time information creating unit 4 associates the plurality of operation status caused for respective application with the time information. As described above, the application fee is charged collectively or is charged in accordance with a time of use. This enables a calculation of the application fee based on the time information corresponding to each operation status. That is, according to the protective control device of this embodiment, information required to calculate the application fee can be obtained.

(2) The operation status is the status indicating the installation completion of the application, the status indicating the start of operation, the status indicating the end of the trial period, or the status indicating the uninstallation completion.

When the application fee is collectively charged, the application fee can be charged by obtaining the time information on the installation completion of the application. In addition, when the application fee is charged in accordance with a time of use, the application fee can be charged by obtaining the time information of the operation start and of the uninstall completion. When the trial period is set for the application, he application fee can be charged by obtaining the time information of the trial period end and of the uninstall completion.

[Second Embodiment]

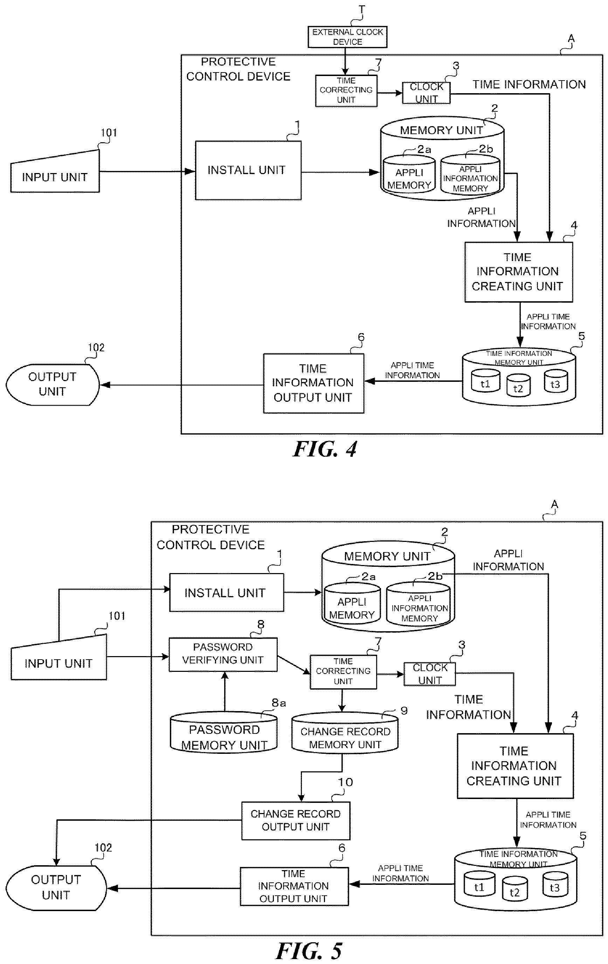

The structure of a protective control device A according to a second embodiment is basically the same as that of the first embodiment. In this embodiment, however, as illustrated in FIG. 4, an external clock device T is connected to the protective control device A, and a time correcting unit 7 which corrects the time of the clock unit 3 based on the time of the external clock device T is provided.

The external clock device T clocks a standard time. The standard time is a standard to correct the time of the clock unit 3. An example external clock device T applicable is a Precision Time Protocol (PTP) grandmaster that is a time server compatible with Institute of Electrical and Electronics Engineers 1588 (IEEE 1588).

The time correcting unit 7 corrects the time of the clock unit 3 based on the standard time of the external clock device T. The time correcting unit 7 has a correction timing at which the time of the clock unit 3 is corrected. Example correction timings are set, for example once per a day, or once per a week, etc. It is not necessary to always set the correction timing to once per a certain time period.

According to this embodiment, in addition to the foregoing embodiment, the following actions and effects can be achieved. The external clock device T that clocks the standard time is connected to the protective control device A, and the protective control device A includes the time correcting unit 7 that corrects the time of the clock unit 3 based on the standard time of the external clock device T.

When there is a difference in the time of the clock unit 3, an error occurs in calculation of the application fee. In addition, since the clock unit 3 of the protective control device A can be changed by the user, when the time of the clock unit 3 is changed, a precise calculation of the application fee becomes difficult. According to this embodiment, however, the time correcting unit 7 corrects the time of the clock unit 3 based on the standard time of the external clock device T. Hence, the precise time of the clock unit 3 can be maintained, and the precise information required for calculating the application fee is obtainable.

[Third embodiment]

The structure of a protective control device A according to a third embodiment is basically the same as that of the second embodiment. According to the protective control device A of this embodiment, however, as illustrated in FIG. 5, no external clock device T is connected, but the protective control device A includes a password memory unit 8a, a password verifying unit 8, a change record memory unit 9, and a change record output unit 10.

In addition, the time correcting unit 7 corrects the time of the clock unit 3 based on the time input externally. When correcting the time of the clock unit 3, the time correcting unit 7 outputs time information before correction and time information after correction to the change record memory unit 9.

The password memory unit 8a stores a password required to correct the time. The password verifying unit 8 determines whether the password input by the user via the input unit 101 is consistent with the password stored in the password memory unit 8a or not.

The change record memory unit 9 stores the time information before correction and the time information after correction as a time change record when the time of the clock unit 3 is corrected. The change record output unit 10 outputs the time change record stored in the change record memory unit 9 to the output unit 102 when, for example, a request of displaying the time change record is input via the input unit 101. The time change record output by the change record output unit 10 is displayed on the output unit 102.

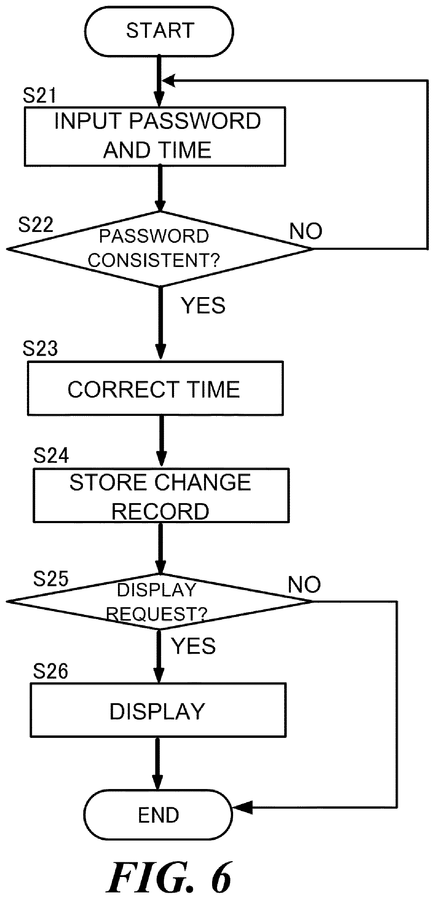

An operation with respect to a time change of the protective control device of this embodiment will be described with reference to FIG. 6. When changing the time of the clock unit 3, the user inputs the password and the corrected time via the input unit 101 (step S21). The password verifying unit 8 determines whether the password input by the user and the password stored in the password memory unit 8a are consistent with each other or not (step S22). When the password is consistent, the password verifying unit 8 outputs the time input by the user to the time correcting unit 7 (step S22: YES). In contrast, when the password is not consistent (step S22: NO), the process is suspended.

The time correcting unit 7 corrects the time of the clock unit 3 based on the time input from the password verifying unit 8 (step S23). The time correcting unit 7 stores, as the time change record, the time information before correction and the time information after correction (step S24). When, for example, a request of displaying the time change record in the input unit 101 (step S25: YES), the change record output unit 10 outputs the time change record stored in the change record memory unit 9 to the output unit 102. Next, the output unit 102 displays the time change record output by the change record output unit 10 (step S26). In addition, when no request of displaying the time change record is input (step S25: NO), the process is terminated.

According this embodiment, in addition to the foregoing embodiments, the following actions and effects can be achieved. The protective control device includes the password memory unit 8a that stores the password which is required to correct the time, the password verifying unit 8 that determines whether the input password and the password stored in the password memory unit 8a are consistent with each other or not, the time correcting unit 7 that corrects the time of the clock unit 3 based on the time input externally when the input password and the password stored in the password memory unit 8a are consistent with each other, the change record memory unit 9 that stores the time information before correction and the time information after correction as the time change record when the time of the clock unit 3 is changed, and the change record output unit 10 that outputs the time change record stored in the change record memory unit 9 to the output unit 102.

As described above, since the clock unit 3 of the protective control device A can be changed by the user, when the time of the clock unit 3 is changed, a precise calculation of the application fee becomes difficult. Hence, when the user manually changes the time of the clock unit 3 of the protective control device A, the user needs to input the password, preventing the time of the clock unit 3 from being changed fraudulently. In addition, by keeping the time change record, the history of the time change is clarified, enabling the user to check whether the time of the clock unit 3 has been changed fraudulently or not. Therefore, the information required to calculate the application fee can be precisely obtained.

[Fourth Embodiment]

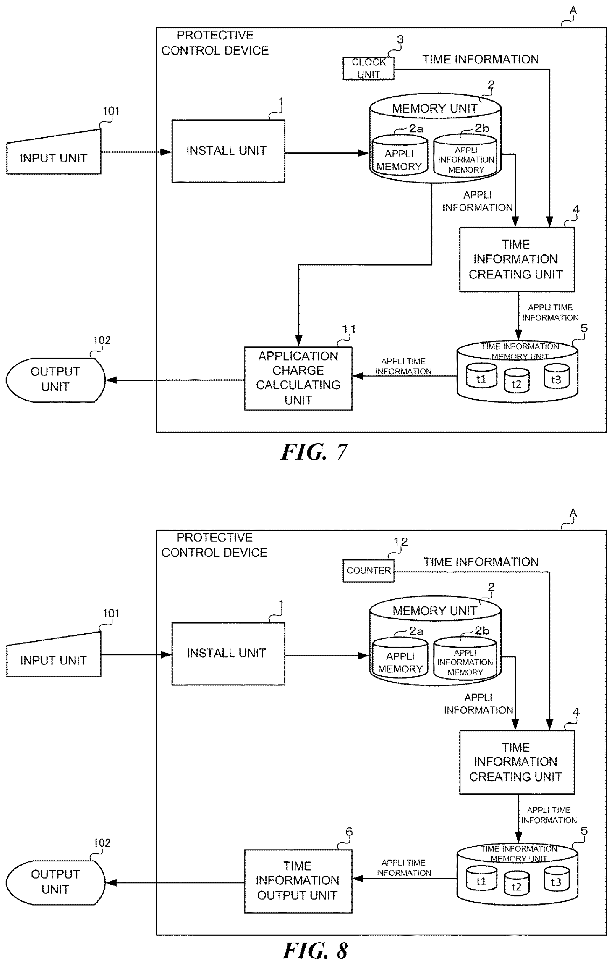

The structure of a protective control device A according to a fourth embodiment is basically the same as that of the first embodiment. However, as illustrated in FIG. 7, the protective control device A of this embodiment includes an application fee calculating unit 11. The application fee calculating unit 11 calculates the application fee based on the application information and the application time information. The application information stored in the appli information memory 2b, and the application time information stored in the time information memory unit 5 are input to the application fee calculating unit 11.

The application fee calculating unit 11 includes an unillustrated selecting unit that selects an arithmetic expression based on the application information. When the appli operation status contained in the application information indicates "installation complete", and the charging form is collective, the selecting unit selects the following formula 1.

$$\text{(Formula 1)}$$
$$\text{Application fee} = x\text{JP 1 YEN}$$

In addition, when the appli operation status contained in the application information indicates "uninstallation complete" and the system form is time of use without trial period, the selecting unit selects the following formula 2. The application time information applied in the following formula corresponds to the appli No. 2 in table 3. That is, such information indicates that the operation start date and time is May d5, y5, and the uninstallation date and time is June d6, y6. Still further, as for 30 in the following formulae 2 and 3, the number of days per a month is entered.

According to the following formula 2, the time after the operation start date and time until the uninstallation date and time is set as the time of use, and this is multiplied by the application fee x2 per an hour to calculate the application fee.

$$\text{(Formula 2)}$$
$$\{(y6-y5) \times 365 + (m6-m5) \times 30 + (d6-d5)\} \times 24 \times x2$$
$$[\text{YEN}]$$

In addition, when the application operation status contained in the application information indicates "uninstallation complete", the charging form is time of use with the trial period, the selecting unit selects the following formula 3. The application time information applied in the following formula corresponds to the appli No. 3 in table 3. That is, such information indicates that the operation start date and time is August d8, y8, the trial period end date and time is September d9, y0, and the uninstallation date and time is October d10, y10. Still further, as for 30 in the following formula 3, the number of days per a month is entered.

According to the following formula 3, the number of days after the trial period end date and time until the uninstallation date and time is set as the day of use, and this is multiplied by the application fee x3 per a day to calculate the application fee.

$$(\text{Formula } 3)$$
$$\{(y10-y9) \times 365 + (m10-m9) \times 30 + (d10-d9)\} \times x3 \; [\text{YEN}]$$

The application fee calculating unit 11 calculates the application fee based on the calculation expression selected by the selecting unit. The calculated application fee is output to the output unit 102. Next, the output unit 102 displays the application fee output by the application fee calculating unit 11.

Note that the above formulae 1-3 are merely examples of arithmetic expressions, and other formulae than those arithmetic expressions are applicable. The formula 2 is the arithmetic expression that multiplies the hour of use by the application fee, the application fee may be calculated based on a formula that also involves minutes and seconds . Likewise, although the formula 3 is the arithmetic expression that multiplies the day of use by the application fee, the application fee may be calculated based on a formula that also involves minutes and seconds.

According to this embodiment as described above, in addition to the foregoing embodiments, the following actions and effects can be achieved. The protective control device includes the application fee calculating unit 11 which calculates the application fee based on the operation status of the application, the charging form, the price, and the application time information, and which outputs the calculated application fee to the output unit 102.

As described above, although the charging form and the unit price may differ for each application, the protective control device A of this embodiment is capable of precisely calculating the application fee.

[Fifth Embodiment]

The structure of a protective control device A according to a fifth embodiment is basically the same as that of the first embodiment. However, as illustrated in FIG. 8, the protective control device A of this embodiment includes a counter 12 instead of the clock unit 3. The counter 12 measures a counter value from the sampling times performed by the protective control device A.

For example, the digital protective control device obtains the voltage, the current, and other system information at a constant sampling cycle from the exterior to perform a protective control calculation. When the sampling cycle is 30 electrical angle, the protective control calculation is performed in synchronization with 1.667 ms in the case of a 50-Hz system, and with 1.389 ms in the case of a 60-Hz system. In addition, in the case of the protective control device installed in the 50-Hz system, the elapsed time of the counter value that is n times is equivalent to $1.667 \times n$ (ms).

According to this embodiment, the time information creating unit 4 associates the application information obtained from the appli information memory 2b with the counter value obtained from the counter 12. The time information creating unit 4 creates application time information as indicated in the following table 4.

[Table 4]

| Appli No. | Time information (counter value) | | | |
|---|---|---|---|---|
| | A) At the time of installation | B) At the time of operation start | C) At the time of trial period end | D) At the time of uninstallation |
| 1 | $N_{1\text{-}1}$ | $N_{1\text{-}2}$ | - | $N_{1\text{-}3}$ |
| 2 | $N_{2\text{-}1}$ | $N_{2\text{-}2}$ | - | $N_{2\text{-}3}$ |
| 3 | $N_{3\text{-}1}$ | $N_{3\text{-}2}$ | $N_{3\text{-}3}$ | $N_{3\text{-}4}$ |
| 4 | ... | ... | ... | ... |
| 5 | ... | ... | ... | ... |

Every time the operation status of the application stored in the appli information memory 2b is updated, the time information creating unit 4 performs association with the counter value. Hence, the counter values at the time of installation, the time of operation start, and the time of uninstallation for each application are involved. In addition, when the trial period is set for the application, the counter value at the time of trial period end time is also involved.

According to this embodiment as described above, the following actions and effects can be achieved. The protective control device A includes the counter 12 that measures the counter value from the sampling times of the protective control device A, the time information creating unit 4 which associates the operation status of the application with the counter value obtained from the counter 12, and which creates the application time information, the time information memory unit 5 that stores the application time information, and the time information output unit 6 that outputs the application time information stored in the time information memory unit 5 to the output unit 102.

The time information creating unit 4 associates the counter value with the respective operation statuses that occur for each application. As described above, the application fee is charged collectively or in accordance with an time of use. Hence, the application fee can be calculated based on the counter value with respect to each operation status. That is, according to the protective control device of this embodiment, it becomes possible to obtain the information required to calculate the application fee.

In addition, even in the cases of the protective control device A having no clock function and the protective control device which has a clock unit with the clock function not assured, by adopting the counter value of the protective control device A, the information required to calculate the application fee can be obtained.

(Other Embodiments)

Several embodiments of the present disclosure have been described in this description, but those embodiments are merely presented as examples, and are not intended to limit the scope of the present disclosure. The above embodiments can be carried out in other various forms, and various omissions, replacements, and modifications can be made thereto without departing from the scope of the present disclosure. Such embodiments and modified forms thereof are within the scope and spirit of the present disclosure, and also within the scope of the invention as recited in the appended claims and the equivalent range thereto.

REFERENCE SIGNS LIST

| | |
|---|---|
| A | Protective control device |
| T | External clock device |
| 101 | Input Unit |
| 102 | Output unit |
| 1 | Install unit |
| 2 | Memory unit |
| 2a | Appli memory |
| 2b | Appli information memory |
| 3 | Clock unit |
| 4 | Time information creating unit |
| 5 | Time information memory unit |
| 6 | Time information Output unit |
| 7 | Time correcting unit |
| 8 | Password verifying unit |
| 8a | Password memory unit |
| 9 | Change record memory unit |
| 10 | Change record output unit |
| 11 | Application fee calculating unit |
| 12 | Counter |

Claims

1. A protective control device comprising:

   a clock unit that clocks a date and time;
   a time information creating unit which associates a operation status of an application with time information obtained from the clock unit, and which creates application time information;
   a time information memory unit that stores the application time information; and

a time information output unit that outputs the application time information stored in the time information memory unit to an output unit.

2. The protective control device according to claim 1, wherein:

an external clock device that clocks a standard time is connected to the protective control device; and
the protective control device further comprises a time correcting unit that corrects a time of the clock unit based on the standard time of the external clock device.

3. The protective control device according to claim 1, further comprising:

a password memory unit that stores a password which is required to correct a time;
a password verifying unit that determines whether an input password and the password stored in the password memory unit are consistent with each other or not;
a time correcting unit that corrects the time of the clock unit based on a time input externally when the input password and the password stored in the password memory unit are consistent with each other;
a change record memory unit that stores, as time change record, time information before correction and time information after correction when the time of the clock unit is corrected; and
a change record output unit that outputs the time change record stored in the change record memory unit to an output unit.

4. A protective control device comprising:

a counter that measures a counter value from sampling times of the protective control device;
a time information creating unit which associates a operation status of an application with a counter value obtained from the counter, and which creates application time information;
a time information memory unit that stores the application time information; and
a time information output unit that outputs the application time information stored in the time information memory unit to an output unit.

5. The protective control device according to any one of claims 1 to 4, wherein the operation status is a status indicating an installation completion of the application, a status indicating a start of operation, a status indicating an end of a trial period, and a status indicating an uninstallation completion.

6. The protective control device according to any one of claims 1 to 5, further comprising an application fee calculating unit which calculates an application fee based on the operation status of the application, a charging form, a price, and the application time information, and which outputs the calculated application fee to the output unit.

INSTALL     OPERATION START     UNINSTALL

(a) APPLI1

COLLECTIVE
CHARGE

INSTALL  OPERATION START     UNINSTALL

(b) APPLI2

| FREE TRIAL PERIOD | FEE-BASED PERIOD |

INSTALL    OPERATION START   TRIAL PERIOD END   UNINSTALL

(c) APPLI3

| FREE TRIAL PERIOD | FEE-BASED PERIOD |

*FIG. 1*

*FIG. 2*

**FIG. 3**

*FIG. 4*

*FIG. 5*

```
                    ┌─────────────┐
                    │    START    │
                    └──────┬──────┘
                           │        ◄────────────────┐
       S21                 ▼                          │
          ┌────────────────────────────────┐         │
          │     INPUT PASSWORD             │          │
          │       AND TIME                 │          │
          └────────────────┬───────────────┘         │
                           │                          │
                           ▼                          │
       S22          ╱─────────────╲       NO          │
              ╱─────────────────────────╲ ───────────►┘
              ╲   PASSWORD CONSISTENT?   ╱
                ╲─────────────────────╱
                           │ YES
                           ▼
       S23
          ┌────────────────────────────────┐
          │        CORRECT TIME            │
          └────────────────┬───────────────┘
                           │
                           ▼
       S24
          ┌────────────────────────────────┐
          │     STORE CHANGE               │
          │       RECORD                   │
          └────────────────┬───────────────┘
                           │
                           ▼
       S25          ╱─────────────╲       NO
              ╱─────────────────────────╲ ───────────┐
              ╲    DISPLAY REQUEST?      ╱            │
                ╲─────────────────────╱               │
                           │ YES                      │
                           ▼                          │
       S26                                            │
          ┌────────────────────────────────┐         │
          │        DISPLAY                 │          │
          └────────────────┬───────────────┘         │
                           │                          │
                           ▼          ◄───────────────┘
                    ┌─────────────┐
                    │     END     │
                    └─────────────┘
```

# *FIG. 6*

A

PROTECTIVE
CONTROL DEVICE

3
CLOCK
UNIT          TIME INFORMATION

101
INPUT UNIT → 1 INSTALL UNIT → 2 MEMORY UNIT

2a APPLI MEMORY    2b APPLI INFORMATION MEMORY

APPLI INFORMATION

4
TIME INFORMATION CREATING UNIT

APPLI TIME INFORMATION

5
TIME INFORMATION MEMORY UNIT
t1  t2  t3

102
OUTPUT UNIT ← 11 APPLICATION CHARGE CALCULATING UNIT ← APPLI TIME INFORMATION

**FIG. 7**

A

PROTECTIVE
CONTROL DEVICE

12
COUNTER        TIME INFORMATION

101
INPUT UNIT → 1 INSTALL UNIT → 2 MEMORY UNIT

2a APPLI MEMORY    2b APPLI INFORMATION MEMORY

APPLI INFORMATION

4
TIME INFORMATION CREATING UNIT

APPLI TIME INFORMATION

5
TIME INFORMATION MEMORY UNIT
t1  t2  t3

102
OUTPUT UNIT ← 6 TIME INFORMATION OUTPUT UNIT ← APPLI TIME INFORMATION

**FIG. 8**

## INTERNATIONAL SEARCH REPORT

| International application No. |
|---|
| PCT/JP2015/079081 |

**A.    CLASSIFICATION OF SUBJECT MATTER**
*G06Q50/06*(2012.01)i, *H02H3/02*(2006.01)i

According to International Patent Classification (IPC) or to both national classification and IPC

**B.    FIELDS SEARCHED**

Minimum documentation searched (classification system followed by classification symbols)
G06Q50/06, H02H3/02

Documentation searched other than minimum documentation to the extent that such documents are included in the fields searched
Jitsuyo Shinan Koho          1922-1996    Jitsuyo Shinan Toroku Koho    1996-2016
Kokai Jitsuyo Shinan Koho    1971-2016    Toroku Jitsuyo Shinan Koho    1994-2016

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 10-161714 A  (Toshiba Corp.),<br>19 June 1998 (19.06.1998),<br>paragraphs [0015] to [0059]<br>(Family: none) | 1-6 |
| Y | JP 2001-265589 A  (Daikin Industries, Ltd.),<br>28 September 2001 (28.09.2001),<br>paragraphs [0089] to [0096]<br>(Family: none) | 1-6 |
| Y | JP 2010-55586 A  (Japan Digital Laboratory Co., Ltd.),<br>11 March 2010 (11.03.2010),<br>paragraphs [0002], [0083], [0109]<br>(Family: none) | 1-6 |

| ☒   Further documents are listed in the continuation of Box C. | ☐   See patent family annex. |
|---|---|

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>      06 January 2016 (06.01.16) | Date of mailing of the international search report<br>      19 January 2016 (19.01.16) |
|---|---|
| Name and mailing address of the ISA/<br>      Japan Patent Office<br>      3-4-3,Kasumigaseki,Chiyoda-ku,<br>      Tokyo 100-8915,Japan | Authorized officer<br><br>Telephone No. |

Form PCT/ISA/210 (second sheet) (July 2009)

**EP 3 312 792 A1**

**INTERNATIONAL SEARCH REPORT**

| International application No. |
|---|
| PCT/JP2015/079081 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-82727 A (Seiko Instruments Inc.), 21 April 2011 (21.04.2011), abstract; paragraphs [0041] to [0060] (Family: none) | 2-6 |
| Y | JP 1-321811 A (Toshiba Corp.), 27 December 1989 (27.12.1989), page 53, lower right column, line 8 to page 54, upper left column, line 15 (Family: none) | 4-6 |
| A | WO 02/010938 A1 (Toshiba Corp.), 07 February 2002 (07.02.2002), entire text; all drawings & JP 2009-187567 A & US 2003/0135541 A1 & EP 1315094 A1 & KR 10-0516794 B1 & CN 1466720 A | 1-6 |
| A | WO 2012/034816 A1 (ABB TECHNOLOGY AG), 22 March 2012 (22.03.2012), entire text; all drawings & US 2013/0174139 A1 & EP 2434398 A1 & CN 103109268 A | 1-6 |

Form PCT/ISA/210 (continuation of second sheet) (July 2009)

**EP 3 312 792 A1**

**REFERENCES CITED IN THE DESCRIPTION**

**Non-patent literature cited in the description**

- Protection Relay Systems Engineering. Institute of Electrical Engineers of Japan, March 2002, 99, , 100